# EUROPÄISCHE PATENTANMELDUNG

(11) **EP 1 493 795 A1**
(43) Veröffentlichungstag der Anmeldung: **05.01.2005**
(21) Anmeldenummer: 03015190.6
(22) Anmeldetag: 04.07.2003
(51) Int. Cl.: C09J 167/00, C09J 153/02

(54) **Klebstoffzusammensetzung**

(71) Anmelder: Collano AG, 6203 Sempach-Station (CH)
(72) Erfinder: Frei, Pia, 6221 Rickenbach (CH); Dobmann, Andreas, 6208 Oberkirch (CH)
(74) Vertreter: Hepp, Dieter

(57) **Zusammenfassung**

Die Erfindung betrifft Klebstoffzusammensetzung, beinhaltend (a) ein elastomeres Blockcopolymer mit einem Diblockanteil von höher als 40%, vorzugsweise von höher als 55%, besonders bevorzugt von höher als 70%, (b) einen sulfonierten, insbesondere verzweigten Copolyester sowie (c) ggf. weitere Zusatzstoffe wie Klebrigmacher und/oder Weichmacher und/oder Stabilisatoren. Die erfindungsgemässen Klebstoffzusammensetzungen haben sich insbesondere aufgrund einer erhöhten Nass-Schälfestigkeit als besonders vorteilhaft erwiesen.

## Beschreibung

Die Erfindung betrifft eine Klebstoffzusammensetzung, eine Verwendung einer solchen Klebstoffzusammensetzung, ein Verfahren zum Verbinden von Substraten unter Verwendung einer solchen Klebstoffzusammensetzung sowie eine Vorrichtung mit mindestens einem Bereich, welcher mit einer solchen Klebstoffzusammensetzung zur Verbindung mit einem Substrat vorbereitet ist. Die Erfindung betrifft insbesondere drucksensitive Heiss-Schmelzklebstoffe und deren Verwendung, insbesondere zur Verklebung von Substraten auf Haut.

Aus dem Dokument US 5,028,485 ist eine drucksensitive Klebstoffzusammensetzung bekannt, welche für den Hautkontakt geeignet sind. Diese beinhaltet ein Polymer, ein Copolymer oder eine Mischung eines Polymers und/oder eines Copolymers; zusätzlich können gewöhnliche Additive vorgesehen sein. Erfindungswesentlich ist die Beigabe relativ hoher Konzentrationen von 1-20 Gew.% einer oder mehrerer Silan-Verbindungen, wodurch die Nass-Schälfestigkeit verbessert wird. Allerdings ist die Verwendung einer reaktiven Silanverbindung mit erheblichen Nachteilen verbunden:
- Durch eine mögliche Gefahrstoff-Einstufung der Silanverbindung kann eine Gefahren-Kennzeichnungspflicht resultieren;
- Entwicklung eines ausgeprägten, als unangenehm empfundenen Geruches des Klebstoffes;
- Allergenes Potential für Hautirritation.

Die Verwendung sulfonierter Polyester in Heiss-Schmelzklebstoffen ist bekannt, beispielsweise aus dem Dokument US 6,428,900. Klebstoffzusammensetzungen, welche 10% bis 90% eines verzweigten, sulfonierten Copolyesters beinhalten, bzw. durch diese bewirkte Verbindungen lösen sich demnach jedoch unter Wassereinwirkung auf.

Weiterhin ist aus dem Dokument EP 761 795 B1 bekannt, sulfonierten Copolyestern ggf. zusätzlich weitere elastomere Polymere wie beispielsweise Styrol beinhaltende Blockcopolymere beizumischen. Diese Klebstoffzusammensetzungen sind bevorzugt nicht drucksensitiv; zudem ist die Nass-Schälfestigkeit für viele Anwendungen, insbesondere auch im medizinischen Bereich, beispielsweise bei selbstklebenden Abdecktüchern zur Verklebung auf Haut, nicht ausreichend aufgrund der inhärenten Wasserlöslichkeit der insbesondere verzweigten sulfonierten Copolyester.

US 6,025,071 beschreibt einen ablösbaren ("removable grade") Heiss-Schmelzklebstoff mit einem Styrol-Isopren-Styrol Blockcopolymer mit einem Diblockanteil von mehr als 50%. Es wird angenommen, dass der hohe Diblockanteil zu einer verbesserten Haftung an dem Basissubstrat beiträgt. Es hat sich jedoch auch für derartige Klebstoffzusammensetzungen herausgestellt, dass die Nass-Schälfestigkeit für viele Anwendungen, insbesondere der Verklebung auf der Haut nicht ausreichend ist.

Es ist daher eine Aufgabe der Erfindung, die Nachteile des Bekannten zu vermeiden, insbesondere also eine Klebstoffzusammensetzung bereitzustellen, welche eine verbesserte Nass-Schälfestigkeit insbesondere auf Haut aufweist und welche zudem in der Handhabung und Verträglichkeit unproblematisch ist. Es ist eine weitere Aufgabe der Erfindung, eine Klebstoffzusammensetzung bereitzustellen, welche kostengünstig und ohne spezielle Vorkehrungen anwendbar ist.

Erfindungsgemäss werden diese Aufgaben gelöst durch eine Klebstoffzusammensetzung sowie der Verwendung einer solchen Klebstoffzusammensetzung bzw. einem Verfahren unter Verwendung einer solchen Klebstoffzusammensetzung sowie eine Vorrichtung mit den Merkmalen der unabhängigen Patentansprüche.

Eine Klebstoffzusammensetzung gemäss der Erfindung beinhaltet ein elastomeres Blockcopolymer mit einem Diblockanteil von höher als 40%, vorzugsweise von höher als 55%, besonders bevorzugt von höher als 70% sowie einen sulfonierten, insbesondere verzweigten Copolyester. Die Klebstoffzusammensetzung kann zudem ggf. weitere Zusatzstoffe wie Klebrigmacher und/oder Weichmacher und/oder Stabilisatoren enthalten.

Unter einem elastomeren Blockcopolymer werden hier und im folgenden insbesondere Polymere der allgemeinen Formel A-B oder A-B-A verstanden, wobei A einen thermoplastischen Block und B einen Block mit gummielastischen und/oder elastomeren, insbesondere kautschukartigen Eigenschaften bezeichnet. Vorzugsweise ist der thermoplastische A-Block ein Polymer von einem oder mehreren Alkenylaromaten, insbesondere Styrol (mit dem besonders vorteilhafte Eigenschaften erreicht werden konnten) sowie dessen Homologen, z.B. α-Methylstyrol; 4-substituierte Styrole, z.B. 4-(4-Phenyl-n-butyl)-styrol und insbesondere 4-Alkylstyrole, z.B. 4-Methylstyrol, 4-n-Propylstyrol und 4-Cyclohexylstyrol; 5-substituierte Styrole, insbesondere 5-Alkylstyrole, z.B. 5-tert.-Butylstyrol; 3,5-disubstituierte Styrole, insbesondere 3,5-Dialkylstyrole, z.B. 3,5-Diethylstyrol und 3,5-Di-n-butylstyrol; 2,4-disubstituierte Styrole, z.B. 2-Ethyl-4-benzylstyrol, insbesondere auch 2,4-Dialkylstyrole, z.B. 2,4-Dimethylstyrol; Vinyltoluol. Der gummielastische und/oder elastomere, insbesondere kautschukartige B-Block ist vorzugsweise ein Polymer eines konjugierten, verzweigten oder linearen, niedrigaliphatischen Diens, insbesondere mit 4, 5 oder 6 Kohlenstoffen, wie z.B. Butadien, 1,3-Pentadien, Isopren, 2,3-Dimethylbutadien, 1,3-Hexadien, bzw. deren voll- oder teilhydrierte Folgeprodukte. Besonders vorteilhafte Eigenschaften konnten mit Isopren erreicht werden.
Die Herstellung derartiger Blockcopolymere ist an sich bekannt. Im Falle der Verwendung von Styrol als A-Block und Isopren als B-Block spricht man auch von S-I bzw. S-I-S Blockcopolymeren. In einer erfindungsgemässen Klebstoffzusammensetzung werden derartige Blockcopolymere mit einem Diblockanteil von höher als 40%, vorzugsweise von höher als 55%, besonders bevorzugt von höher als 70% eingesetzt. Derartige Blockcopolymere sind kommerziell erhältlich, z.B. Kraton™ D 1119 (Kraton Polymers, 66% Diblockanteil) und Quintac™ 3520 (Zeon Chemicals, 78% Diblockanteil). Unter dem Diblockanteil wird hier und im folgenden der Anteil der Moleküle an der Gesamtheit der Blockcopolymere verstanden, welche je einen Block A und einen Block B gemäss vorstehender Definitionen beinhalten, welche ggf. durch konstitutionelle Einheiten, die nicht Bestandteil der Blöcke sind, miteinander verbunden sind.

Unter einem sulfonierten Copolyester werden hier und im folgenden sowohl lineare als auch verzweigte sulfonierte Copolyester verstanden. Besonders bevorzugt werden Copolyester eingesetzt, welche einen difunktionalen Sulfo-Monomerbaustein mit mindestens einer -SO₃H oder -SO₃M Funktionalität (M = metallisches Gegenion) an einem vorzugsweise aromatischen Kern aufweist. Bevorzugte aromatische Kerne sind Benzol, Naphthalin, Anthracene, Biphenyl, Oxybiphenyl, Sulfonylbiphenyl und Methylenbiphenyl. Besonders bevorzugt werden als difunktionale Sulfo-Monomerbausteine 5-Natriumsulfonatisophthalsäure, 5-Natriumsulfonatisophthalat, 5-Lithiumsulfonatisophthalsäure und Bis (2-hydroxyethyl)-5-Natriumsulfonatisophthalat eingesetzt. Innerhalb des Grundgerüsts der sulfonierten, insbesondere verzweigten Copolyester sind die genannten Sulfo-Monomerbausteine bevorzugt zufällig verteilt angeordnet; dies kann beispielsweise durch Copolymerisation in das Polymer-Grundgerüst erreicht werden. Die Herstellung derartiger sulfonierter, insbesondere verzweigter Copolyester ist an sich bekannt. Kommerziell erhältlich sind insbesondere verzweigte, sulfonierte Copolyester mit dem Sulfo-Monomerbaustein 5-Natriumsulfonatisophthalsäure, z.B. Eastman™ AQ 1950.

Überraschenderweise wurde nun gefunden, dass durch die Kombination von elastomeren Blockcopolymeren mit hohem Diblockanteil und sulfonierten, insbesondere verzweigten Copolyestern Klebstoffzusammensetzungen erhalten werden können, welche eine verbesserte Nass-Schälfestigkeit aufweisen.
Die Trocken- und Nass-Schälfestigkeiten wurden bestimmt mittels einer Methode, die im wesentlichen dem in dem Dokument US 5,028,485, Spalte 4, Zeilen 20-38 offenbarten Verfahren entspricht.

In einer besonders bevorzugten Ausführungsform der Erfindung beinhaltet die Klebstoffzusammensetzung 10 Gew.% - 40 Gew.% mindestens eines Copolymers mit einem Diblockanteil von höher als 40%, vorzugsweise von höher als 55%, besonders bevorzugt von höher als 70%; 5 Gew.% - 30 Gew.% eines sulfonierten, insbesondere verzweigten Copolyesters; 20 Gew.% - 60 Gew.% eines Klebrigmachers; 10 Gew.% - 30 Gew.% eines Weichmachers und vorzugsweise mindestens einen Hilfsstoff, insbesondere einen Stabilisator.

Unter Klebrigmacher werden hier und im folgenden insbesondere Harze verstanden. Im Rahmen der Erfindung können vorzugsweise natürliche und modifizierte Harze verwendet werden, z.B. Gummiharze, Holzharze, Kollophoniumharze, Ölharze, destillierte Harze, hydrierte Harze, dimerisierte und polymerisierte Harze. Weiterhin können auch Ester, insbesondere Glyzerin- oder Pentaerythritolester von natürlichen oder modifizierten Harzen verwendet werden, insbesondere Glyzerinester von Holzharzen, Glyzerinester von hydrierten Harzen o. dgl.; ferner können auch aliphatische, aromatische oder gemischt aliphatisch/aromatische Kohlenwasserstoffharze und phenolisch modifizierte Terpenharze oder deren hydrierte Derivate eingesetzt werden. Selbstverständlich können für besondere Anwendungen auch Mischungen der genannten Klebrigmacher eingesetzt werden. Ein besonders bevorzugt im Rahmen der Erfindung einzusetzender Klebrigmacher ist Foral™ 85-E von Eastman™, ein Ester eines hydrierten Harzes.

Unter Weichmachern werden hier und im folgenden Stoffe verstanden, welche der Klebstoffzusammensetzung beigegeben werden können, um deren Verarbeitbarkeit und elastische Eigenschaften, insbesondere Flexibilität und Dehnbarkeit zu verbessern; eine zusätzliche Wirkung als Klebrigmacher ist möglich. Üblicherweise im Rahmen der Erfindung zu verwendende Weichmacher sind insbesondere Polyester, Epoxide, Phosphorsäurederivate, Phthalsäurederivate, Isophthalsäurederivate, Diphenylderivate, Maleinsäurederivate, Glykolate, Zitronensäurederivate, Benzoesäurederivate, Adipinsäurederivate, Rizinusöl, Mineralöle und Glyzeryltrihydroxyoleat, aber auch flüssige, hydroxylierte Fettsäuren und/oder konjugierte Fettsäuren, bspw. Isostearinsäure. Ein im Rahmen der Erfindung bevorzugt zu verwendender Weichmacher ist kommerziell von BASF erhältlich unter der Bezeichnung VISTANEX^{TM} PAR 950, ein mittelmolekulares Polybuten.

Unter Hilfsstoffen werden hier und im folgenden insbesondere auch anorganische Verdünnungs- oder Füllmittel (bspw. Calciumcarbonat, Zinkoxid, Titanoxid, Talk, Russ, Tone o. dgl.), UV-Absorptionsmittel, Wärmestabilisatoren, Trennmittel, Antihaftmittel, Antioxidantien. Bevorzugte Antioxidationsmittel zur Verwendung in den erfindungsgemässen Klebstoffzusammensetzungen sind unter der Bezeichnung IRGANOX^{TM} von Ciba SC erhältlich, insbesondere Irganox 1010.

Gemäss einer besonders bevorzugten Ausführungsform der Erfindung enthält die Klebstoffzusammensetzung als Copolymerkomponente mit einem Diblockanteil von höher als 40%, vorzugsweise von höher als 55%, besonders bevorzugt von höher als 70% ein Styrol-Blockcopolymer, vorzugsweise ein Styrol-Isopren Blockcopolymer. Mit derartigen Blockcopolymeren konnten besonders vorteilhafte Eigenschaften insbesondere hinsichtlich der verbesserten Nass-Schälfestigkeit erhalten werden.

In einer weiteren Ausführungsform der Erfindung weist eine durch die Klebstoffzusammenstzung bewirkbare Verklebung eine 180°-Nass-Schälfestigkeit von mehr als 8 N/m, vorzugsweise von mehr als 16 N/m, besonders bevorzugt von 24 N/m und mehr auf. Die Nass-Schälfestigkeiten wurden bestimmt mit einer 23µ dicken Polyesterfolie als Trägermaterial mittels einer Methode, die im wesentlichen dem in dem Dokument US 5,028,485, Spalte 4, Zeilen 20-38 offenbarten Verfahren entspricht.

Die erfindungsgemässen Klebstoffzusammensetzung werden besonders vorteilhaft zur Verbindung von natürlichen oder synthetischen, insbesondere textilen Flächengebilden miteinander und/oder mit einem zweiten Substrat, insbesondere der Haut verwendet. Durch die erhöhte Nass-Schälfestigkeit kann insbesondere eine dauerhafte Verbindung in feuchtem Milieu gewährleistet werden.

Die Erfindung betrifft darüber hinaus auch Verfahren zum Verbinden von Substraten unter Verwendung einer erfindungsgemässen Klebstoffzusammensetzung, insbesondere der Verbindung eines Substrats mit der Haut. Die erfindungsgemässen Klebstoffzusammensetzungen können besonders vorteilhaft in allen Verfahren zum Verbinden von Substraten angewendet werden, bei welchen es u.a. auf erhöhten Nass-Schälfestigkeit ankommt.

Die Erfindung betrifft ferner Produkte mit mindestens einem Bereich, welcher zur Verbindung mit einem Substrat vorbereitet ist, wobei dieser Bereich zumindest partiell mit einer Beschichtung versehen ist, welche eine erfindungsgemässe Klebstoffzusammensetzung beinhaltet. Hierbei kann es sich insbesondere auch um ein natürliches oder synthetisches, insbesondere textiles Flächengebilde und/oder ein Klebeband handelt. Ein bevorzugter Anwendungsbereich sind insbesondere medizinische Klebebänder oder Klebeabschnitte beispielsweise an Operationstüchern, insbesondere aber auch Pflaster, EKG-Elektroden o. dgl.. Die erfindungsgemässen Klebstoffzusammensetzungen erfüllen hervorragend die gerade in diesen Anwendungsbereichen hohen Anforderungen an Hautverträglichkeit und Nass-Schälfestigkeit.

Die Erfindung wird nachfolgend anhand von Ausführungsbeispielen näher erläutert, ohne dass der Gegenstand der Erfindung auf diese Ausführungsbeispiele zu beschränken wäre.

**Tabelle 1:**

| *Klebstoffzusammensetzungen (A*, B*, C*: Vergleichsversuche; D, E: erfindungsgemässe Klebstoffzusammensetzungen)* und *deren Trocken- und Nass- Schälfestigkeiten.* | | | | | | |
|---|---|---|---|---|---|---|
| | **% Diblock** | **A*** | **B*** | **C*** | **D** | **E** |
| Kraton D 1111 | 15 | 4.6 | 4.1 | - | - | - |
| Kraton D 1112 | 38 | 14.8 | 13.3 | - | - | - |
| Europrene SOL T 190 | 25 | 5.7 | 5.1 | - | - | - |
| Kraton D-1119P | 66 | - | - | - | 22.6 | - |
| Quintac 3520 | 78 | - | - | 25.1 | - | 22.6 |
| AQ 1950 | | - | 10.0 | - | 10.0 | 10.0 |
| Foral 85-E | | 51.2 | 46.1 | 51.2 | 46.0 | 46.0 |
| Vistanex PAR 950 | | 22.7 | 20.4 | 22.7 | 20.4 | 20.4 |
| Irganox 1010 | | 1.0 | 1.0 | 1.0 | 1.0 | 1.0 |
| Viskosität in mPa*s (160°C) mPa*s | | 4200 | 1700 | 4000 | 2400 | 4300 |
| 180°-Schälfestigkeit (N/m), trocken | | 140 | 260 | 308 | 272 | 276 |
| 180°-Schälfestigkeit (N/m), nass | | 2.0 | 6.4 | 16.0 | 8.8 | 24.0 |

Tabelle 1 zeigt die Zusammensetzung ausgewählter Beispiele erfindungsgemässer Klebstoffzusammensetzungen (D und E) sowie Vergleichsversuche, welche mit * gekennzeichnet sind (A*, B* und C*).

### Bestandteile der Klebstoffzusammensetzungen

Als Bestandteile der Klebstoffzusammensetzungen wurden die folgenden kommerziell erhältlichen Produkte verwendet: Kraton™ D-1111 (Diblockanteil 15%), Kraton™ D-1112 (Diblockanteil 38%) sowie Kraton™ D-1119P, alle von Kraton Polymers; Europrene SOL T 190 (Diblockanteil von 25%) von Polimeri Europa; Quintac™ 3520 (78% Diblockanteil) von Zeon Chemicals; Foral™ 85-E von Eastman; Vistanex™ PAR 950 von BASF sowie Irganox™ 1010 von Ciba SC.

### Vergleichsversuche

Vergleichsversuch A* zeigt eine Klebstoffzusammensetzung mit einer Mischung von Styrol-Isopren Blockcopolymeren mit niedrigem Diblockanteil (15%, 38% und 25%). Sowohl die Trocken- als auch die Nass-Schälfestigkeit sind für viele Anwendungsbereiche nicht ausreichend. Durch den Zusatz eines sulfonierten Copolyesters in Vergleichsversuch B* kann bereits eine Verbesserung der Trockenund Nass-Schälfestigkeit um einen Faktor von ca. 2 bzw. 3 erreicht werden. Die Verwendung eines Styrol-Isopren Blockcopolymeren mit hohem Diblockanteil von 78% in Vergleichsversuch C* anstatt der Mischung der Blockcopolymere mit niedrigem Diblockanteil kann insbesondere die Nass-Schälfestigkeit nochmals um einen Faktor von ca. 2.5 verbessert werden gegenüber Vergleichsversuch B*.

### Erfindungsgemässe Klebstoffzusammensetzungen

Die Klebstoffzusammensetzungen gemäss den Ausführungsbeispielen D und E kombinieren nun den hohen Diblockanteil des Blockcopolymers und die Beimischung eines sulfonierten Copolyesters. Die Klebstoffzusammensetzungen D und E unterscheiden sich lediglich durch den unterschiedlichen Diblockgehalt des Blockcopolymers. Insbesondere anhand der Klebstoffzusammensetzung E wird deutlich, dass mit einer erfindungsgemässen Klebstoffzusammensetzung Nass-Schälfestigkeiten erzielbar sind, welche mit keinem der Vergleichsversuche A*, B* und C* erzielbar waren. Insbesondere die Gegenüberstellung von Vergleichsversuch C* (kein sulfonierter Polyester) und der Klebstoffzusammensetzung E offenbart einen positiven Effekt auf die erzielbare Nass-Schälfestigkeit.

Im übrigen gelten für die erfindungsgemässen Klebstoffzusammensetzungen im wesentlichen die gleichen vorteilhaften Verarbeitungs- und Verträglichkeitseigenschaften insbesondere gegenüber der Haut, wie sie bereits für den Vergleichsversuchen A*, B* und C* ähnliche Klebstoffzusammensetzungen bekannt sind.

### Bestimmung der Trocken- und Nass-Schälfestigkeiten

Die Trocken- und Nass-Schälfestigkeiten wurden bestimmt mittels einer Methode, die im wesentlichen dem in dem Dokument US 5,028,485, Spalte 4, Zeilen 20-38 offenbarten Verfahren entspricht.
Es handelt sich um eine Kraftmessung mit einer Zugprüfmaschine. Bestimmt wird die Kraft, die erforderlich ist, um ein Klebematerial, welches unter definierten Bedingungen auf ein bestimmtes Testmaterial geklebt wurde, von diesem in einem definierten Schälwinkel und einer bestimmten Geschwindigkeit wieder abzulösen. Als Zugprüfmaschine wurde eine Instron™ 5565 verwendet, als Trägermaterial wurde ein Nonwoven Omnidrape von Paul Hartmann verwendet. Die zu prüfende Probe wird ebenfalls auf ein solches Operationstuch aufgebracht (Teststreifen von 25mm Breite und 150mm Länge; Auftragsgewicht 50 g/m²) und mit dem Trägermaterial verklebt. Das Verkleben erfolgt durch einmaliges Überrollen mit einer 0.5 kg Anpressrolle. Die aufgeklebten Teststreifen werden nach 30 Minuten trocken geprüft; für die Bestimmung der Nass-Schälfestigkeit werden die verklebten Muster nach 30 Minuten mit 2 ml deionisiertem Wasser benetzt und nach weiteren 5 Minuten geprüft. Die Messung erfolgt unter einem Schälwinkel von 180° und einer Schälgeschwindigkeit von 300 mm/Minute. Die angegebenen Werte entsprechen dem Mittelwert aus 4 unabhängigen Messungen.

## Patentansprüche

1. Klebstoffzusammensetzung, beinhaltend
(a) ein elastomeres Blockcopolymer mit einem Diblockanteil von höher als 40%, vorzugsweise von höher als 55%, besonders bevorzugt von höher als 70%;
(b) einen sulfonierten, insbesondere verzweigten Copolyester;
(c) ggf. weitere Zusatzstoffe wie Klebrigmacher und/oder Weichmacher und/oder Stabilisatoren.

2. Klebstoffzusammensetzung nach Anspruch 1, beinhaltend
(a) 10 Gew.% - 40 Gew.% mindestens eines elastomeren Blockcopolymers mit einem Diblockanteil von höher als 40%, vorzugsweise von höher als 55%, besonders bevorzugt von höher als 70%;
(b) 5 Gew.% - 30 Gew.% eines sulfonierten, insbesondere verzweigten Copolyesters;
(c) 20 Gew.% - 60 Gew.% eines Klebrigmachers;
(d) 10 Gew.% - 30 Gew.% eines Weichmachers;
(e) vorzugsweise mindestens einen Hilfsstoff, insbesondere einen Stabilisator.

3. Klebstoffzusammensetzung nach einem der Ansprüche 1 oder 2, beinhaltend als Bestandteil (a) ein Styrol Blockcopolymer, vorzugsweise ein Styrol-Isopren Blockcopolymer.

4. Klebstoffzusammensetzung nach einem oder mehreren der Ansprüche 1 bis 3, **dadurch gekennzeichnet, dass** der Diblockanteil des Bestandteils (a) nicht höher ist als 90%, vorzugsweise nicht höher ist als 85%, besonders bevorzugt nicht höher ist als 80%.

5. Klebstoffzusammensetzung nach einem oder mehreren der Ansprüche 1 bis 4, **dadurch gekennzeichnet, dass** eine durch die Klebstoffzusammensetzung bewirkbare Verklebung eine 180°-Nass-Schälfestigkeit von mehr als 8 N/m, vorzugsweise von mehr als 16 N/m, besonders bevorzugt von 24 N/m und mehr aufweist.

6. Verwendung einer Klebstoffzusammensetzung gemäss einem der Ansprüche 1 bis 5 zum Verbinden von natürlichen oder synthetischen, insbesondere textilen Flächengebilden miteinander und/oder mit einem zweiten Substrat, insbesondere der Haut.

7. Verfahren zum Verbinden von Substraten, **dadurch gekennzeichnet, dass** die Verbindung durch eine Klebstoffzusammensetzung gemäss einer der Ansprüche 1 bis 5 herbeigeführt wird.

8. Verfahren gemäss Anspruch 7, **dadurch gekennzeichnet, dass** eine Verbindung eines Substrats mit der Haut herbeigeführt wird.

9. Produkt mit einem Bereich, welcher zur Verbindung mit einem Substrat vorbereitet ist, wobei dieser Bereich zumindest partiell mit einer Beschichtung versehen ist, welche eine Klebstoffzusammensetzung gemäss einer der Ansprüche 1 bis 5 beinhaltet.

10. Produkt nach Anspruch 9, **dadurch gekennzeichnet, dass** es sich um ein natürliches oder synthetisches, insbesondere textiles Flächengebilde und/oder ein Klebeband handelt.
